# FASCICULE DE BREVET EUROPEEN

(11) **EP 4 576 682 B1**
(45) Date de publication et mention de la délivrance du brevet: **19.11.2025**
(21) Numéro de dépôt: 24221388.2
(22) Date de dépôt: 19.12.2024
(51) Int. Cl.: H04L 12/407, H04L 12/413, H04L 12/40

(54) **PROCÉDÉ DE SURVEILLANCE D'UN RÉSEAU DE TYPE ETHERNET HALF DUPLEX ET RÉSEAU DE TYPE ETHERNET HALF DUPLEX ASSOCIÉ**
VERFAHREN ZUR ÜBERWACHUNG EINES HALB-DUPLEX-ETHERNET-NETZWERKS UND ZUGEHÖRIGES HALB-DUPLEX-ETHERNET-NETZWERK
METHOD FOR MONITORING AN ETHERNET HALF-DUPLEX NETWORK AND ASSOCIATED ETHERNET HALF-DUPLEX NETWORK

(30) Priorité: 19.12.2023 FR 2314500
(43) Date de publication de la demande: 25.06.2025
(73) Titulaire: THALES, 92190 Meudon (FR)
(72) Inventeur: CHAPUIS, Mael, 33700 MERIGNAC (FR); SITBON, Arnaud, 33700 MERIGNAC (FR)
(74) Mandataire: Lavoix

(56) Documents cités:
- JP-A- 2022 530 400
- US-A1- 2021 377 343
- US-B1- 11 652 585

## Description

La présente invention concerne un procédé de surveillance d'un réseau de type Ethernet Half Duplex. La présente invention concerne également un tel réseau de type Ethernet Half Duplex.

En particulier, le réseau de type Ethernet Half Duplex selon l'invention est conforme à l'un des standards suivants : 10BASE-T1S, 100BASE-T1S, 10BASE-T1L, 100BASE-T1L. Ces standards sont conformes à la norme de type IEEE STD 802.3cg.

De manière connue en soi, les réseaux de ce type permettent de transmettre des données issues par exemple d'une pluralité de capteurs à un commutateur central. Ce type de réseau est un réseau de type Half Duplex, dans la mesure où il permet de transmettre des trames dans les deux sens de circulation entre les nœuds constituant ce réseau sur la même paire de conducteurs.

En outre, dans un mode de fonctionnement particulier, ce type de réseau met en œuvre une technique de gestion de collisions optimisée pour utiliser le maximum de la bande passante disponible pour les échanges entre différents nœuds du réseau.

Ce mode de fonctionnement est connu sous l'appellation de PLCA (de l'anglais *« Physical Layer Collision Avoidance »)* et se base principalement sur la présence d'un nœud master sur le réseau qui envoie de manière périodique un signal de synchronisation appelé BEACON.

Ce signal de synchronisation permet aux autres nœuds de se synchroniser et de déterminer leurs propres opportunités d'émission de trames dans le réseau.

L'absence du signal de synchronisation sur le réseau, due par exemple à une défaillance du nœud maître appelé Master, force les différents nœuds du réseau à reconfigurer le mode de gestion de collisions en passant du mode de fonctionnement PLCA dans un mode de fonctionnement dégradé appelé CSMA/CD (de l'anglais « *Carrier Sense Multiple Access*/*Collision Detection »).*

Le passage dans un tel mode implique une diminution importante des performances du réseau. En effet, lorsque le réseau se trouve dans ce mode de fonctionnement dégradé, chaque nœud souhaitant émettre une trame sur le réseau vérifie d'abord s'il existe un autre nœud qui est déjà en train d'émettre des trames sur le réseau. Dans un tel cas, ce premier nœud va attendre un temps aléatoire avant d'effectuer à nouveau ce test. Un exemple de réseau mettant en œuvre le mode de fonctionnement PLCA est connu de la demande de brevet US 20221/377343 A1.

Dans certains domaines et notamment dans le domaine avionique, le réseau de type précité présente une alternative intéressante des réseaux actuellement utilisés.

Par exemple, dans le domaine avionique, il est connu l'utilisation de réseau de type ARINC 429 pour raccorder des capteurs à un commutateur centralisé. Toutefois, le type de réseau conforme à cette norme présente un débit très bas, typiquement autour de 100 Kbit/s et n'est qu'unidirectionnel.

Au contraire, par exemple le réseau de type 10BASE-T1S présente un débit de 10 Mbit/s et le réseau de type 100BASE-T1S présente un débit de 100 Mbit/s.

De plus, un réseau de type Half Duplex qui permet la transmission des trames dans les deux sens par la même paire de conducteurs permettrait de réduire l'utilisation nécessaire de câbles. En effet, pour les réseaux existants, une paire de conducteurs est nécessaire pour assurer la circulation des trames selon chaque direction.

Toutefois, le remplacement des réseaux existants par ce type de réseau présente un certain nombre de difficultés.

En particulier, lorsque le réseau par exemple de type 10BASE-T1S passe dans son mode de fonctionnement dégradé, le temps de transmission des trames ne peut plus être borné.

Cela rend alors le réseau de ce type non-déterministe. L'utilisation de réseau non-déterministe est problématique dans certains domaines et notamment dans le domaine avionique.

La présente invention a pour objectif de résoudre ce problème et de rendre le réseau de type Ethernet Half Duplex (tel que 10BASE-T1S, 100BASE-T1S, 10BASE-T1L, 100BASET-1L) déterministe.

Cela permettra alors son utilisation dans des nombreux domaines et notamment dans le domaine avionique.

À cet effet, l'invention concerne un procédé de surveillance d'un réseau de type Ethernet Half Duplex comprenant une pluralité de nœuds et présentant un mode de fonctionnement PLCA et un mode de fonctionnement CSMA/CD, chaque nœud étant défini par un identifiant.

Dans le mode de fonctionnement PLCA, un nœud master envoie à l'ensemble des autres nœuds un signal de synchronisation pour émission de leurs trames.

Dans le mode de fonctionnement CSMA/CD, l'ensemble des nœuds émettent leurs trames selon des intervalles temporels aléatoires.

Le procédé comprend les étapes suivantes mises en œuvre par chaque nœud :
- récupération d'un état interne du nœud décrivant le mode de fonctionnement du réseau ;
- transmission de l'état interne à l'ensemble des autres nœuds ;
- analyse des états externes reçus correspondant aux états internes transmis par des autres nœuds ;
- en fonction de cette analyse, reconfiguration du nœud ou maintien de sa configuration actuelle.

Selon d'autres aspects avantageux de l'invention, le procédé comprend une ou plusieurs caractéristiques suivantes prise(s) isolément ou suivant toutes les combinaisons techniquement possibles :
- chaque état interne indique le mode de fonctionnement du réseau vu par le nœud correspondant ;
- chaque état interne indique en outre si le nœud correspondant reçoit ou transmet un signal de synchronisation ;
- l'étape de transmission de l'état interne comprend l'intégration de cet état interne dans chaque trame émise par le nœud correspondant ;
- l'étape de reconfiguration de chaque nœud comprend une désactivation de ce nœud ou un décalage de son identifiant ;
- le décalage de l'identifiant comprend :
   - l'attribution d'un nouvel identifiant choisi en fonction du nombre maximal de nœuds dans le réseau lorsque le nœud correspondant est le nœud master ;
   - la réduction de l'identifiant de « 1 » pour tous les autres cas ;
- l'étape de l'analyse des états externes reçus comprend une sous-étape de validation comprenant la sélection d'un état valide parmi l'ensemble des états reçus ;
- l'étape d'analyse comprend une analyse d'au moins trois états externes issus de nœuds différents ;
- la sous-étape de validation comprend la comparaison des états externes reçus et la sélection de l'état valide correspondant à un état commun d'une majorité des états externes reçus ;
- l'état valide indique :
   - le mode de fonctionnement PLCA, la configuration actuelle du nœud correspondant est maintenue ;
   - le mode de fonctionnement CSMA/CD, le nœud correspondant est reconfiguré par un décalage de son identifiant ;
   - aucun de ces modes de fonctionnement, le nœud correspondant est reconfiguré par une désactivation de ce nœud ;
- l'étape d'analyse comprend une sous-étape de l'activation du mode de fonctionnement CSMA/CD lorsque le nœud correspondant ne reçoit aucune trame dans un premier intervalle temporel ;
- suite à l'activation du mode de fonctionnement CSMA/CD, l'étape de reconfiguration comprend un décalage de l'identifiant du nœud correspondant lorsque ce nœud reçoit au moins une trame dans un deuxième intervalle temporel et une désactivation du nœud dans le cas contraire.

L'invention concerne également un réseau de type Ethernet Half Duplex comprenant une pluralité de nœuds et présentant un mode de fonctionnement PLCA et un mode de fonctionnement CSMA/CD, chaque nœud étant défini par un identifiant ;
- dans le mode de fonctionnement PLCA, un nœud master étant apte à envoyer à l'ensemble des autres nœuds un signal de synchronisation pour émission de leurs trame ;
- dans le mode de fonctionnement CSMA/CD, l'ensemble des nœuds étant aptes à émettre leurs trames selon des intervalles temporels aléatoires ;
chaque nœud étant configuré pour mettre en œuvre le procédé comme défini précédemment.

L'invention apparaitra plus clairement à la lecture de la description qui va suivre, donnée uniquement à titre d'exemple non limitatif et faite en référence aux dessins dans lesquels :
- [Fig.1] la figure 1 est une vue schématique d'un réseau de type Ethernet Half Duplex selon l'invention, le réseau comprenant notamment une pluralité de nœuds ;
- [Fig.2] la figure 2 est un organigramme d'un procédé de surveillance du réseau de la figure 1 ;
- [Fig.3] [Fig.4] [Fig.5] [Fig.6] [Fig.7] les figures 3 à 7 sont différentes illustrations de la mise en œuvre du procédé de la figure 2.

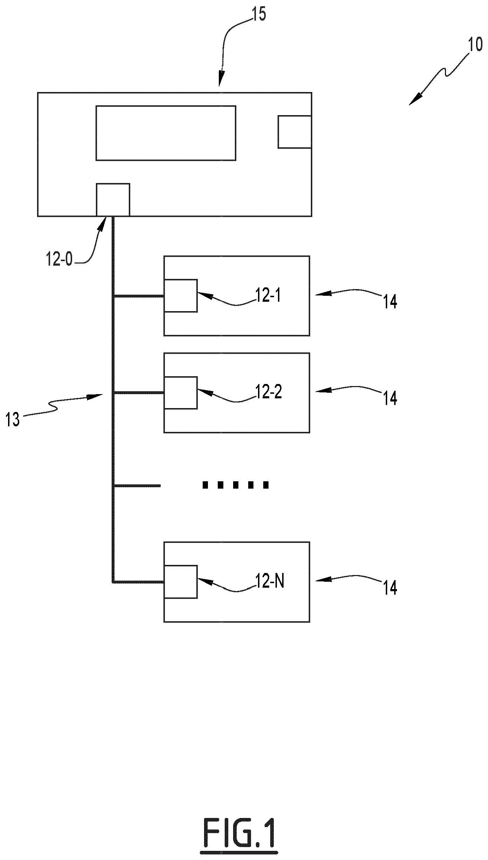

La figure 1 illustre en effet un réseau 10 selon l'invention.

Ce réseau 10 est un réseau de type Ethernet Half Duplex qui est conforme à l'un des standards 10BASE-T1S, 100BASE-T1S, 10BASE-T1L ou 100BASE-T1L. De manière générale, un tel standard est normalisé dans la norme de type IEEE STD 802.3cg. Par « norme de type X », on entend la norme X de la version en vigueur ou de toute version ultérieure ou antérieure lorsque cette version permet de mettre en œuvre les caractéristiques décrites en relation avec cette norme ci-dessous.

Comme cela est illustré sur la figure 1, le réseau 10 comprend une pluralité de nœuds 12-0, ... 12-N qui sont raccordés par un câble 13. Le câble 13 présente avantageusement un câble avec une paire différentielle, par exemple un câble à paire torsadée.

Chacun des nœuds 12-0, ... 12-N est intégré dans un dispositif qui est apte à générer des données numériques pour les envoyer autres dispositifs via le réseau 10 et/ou à recevoir des données numériques issues de ces dispositifs. Les données numériques sont transférées via le réseau 10 sous la forme de trames.

En particulier, selon un mode de réalisation de l'invention, le réseau 10 est utilisable dans le domaine avionique, par exemple le réseau 10 est embarqué à bord d'un aéronef.

Par un aéronef, on entend tout engin volant qui est pilotable de manière au moins partiellement manuelle et/ou alors de manière au moins partiellement automatique.

Selon un exemple de réalisation, au moins certains des dispositifs intégrant les nœuds 12-0, ... 12-N présentent des capteurs avioniques 14 et un dispositif intégrant au moins l'un de ces nœuds présente un commutateur 15. Un tel commutateur 15 est configuré pour transmettre des données générées par les capteurs vers un calculateur centralisé.

Selon cet exemple, les données générées par les capteurs 14 présentent par exemple des données de mesure qui sont alors transmises au calculateur central via le réseau 10 et notamment le commutateur 15.

Ainsi, dans l'exemple de la figure principale, le nœud 12-0 est intégré dans un tel commutateur 15 et les autres nœuds 12-1 à 12-N sont intégrés dans les capteurs 14.

Par ailleurs, le nœud 12-0 est aussi apte à transmettre des données vers les autres nœuds. Ces données présentent par exemple des données de configuration des capteurs 14 correspondants.

De manière connue en soi, chaque nœud 12-0, ... 12-N présente une interface physique souvent mise en œuvre par un composant appelé PHY. Cette interface physique PHY comprend notamment un registre interne stockant différents paramètres de fonctionnement du nœud.

Par ailleurs, chaque nœud 12-0, ... 12-N est associé à un identifiant unique dans le réseau 10. Par exemple, les identifiants des nœuds 12-0, ... 12-N correspondent au numéro du nœud attribué au sein du réseau et allant de 0 jusqu'à N.

Les identifiants des nœuds peuvent être changés, comme cela sera décrit plus en détail par la suite.

De manière connue en soi, le réseau 10 présente deux modes de fonctionnement.

Dans un premier mode de fonctionnement, appelé également mode de fonctionnement PLCA, tous les échanges des trames dans le réseau 10 sont contrôlés par un signal de synchronisation transmis à l'ensemble des nœuds par le nœud master.

Ce nœud master a généralement l'identifiant « 0 » qui le distingue alors des autres nœuds du réseau. Ce nœud master est alors configuré pour envoyer périodiquement un signal de synchronisation, appelé également BEACON. Tous les autres nœuds sont aptes à recevoir ce signal de synchronisation et à émettre leurs trames dans un slot temporel prédéterminé pour le nœud correspondant. Ce slot temporel est déterminé localement par le nœud correspondant à l'aide du signal de synchronisation. Le nœud master est également configuré pour agir comme les autres nœuds, c'est-à-dire, il est également configuré pour émettre des trames dans un slot temporel déterminé.

Lorsque le nœud correspondant n'a pas de trame à envoyer dans son slot, ce slot reste alors vide et aucune trame n'est envoyée dans le réseau durant ce slot.

Avantageusement, chaque slot peut avoir une durée variable. Par exemple, chaque slot peut correspondre à une durée durant laquelle le nœud peut commencer à émettre. Chaque slot a donc une durée minimale correspondant à une absence de trame mais cette durée peut s'étendre à la durée de la trame à émettre en présence d'une telle trame. Dans un tel cas, le nœud émetteur suivant ne commencera à émettre qu'à la fin l'émission de trame par le premier nœud, c'est-à-dire, le nœud émetteur suivant ne commencera à émettre qu'après la détection d'un « silence » dans le réseau.

Le deuxième mode de fonctionnement du réseau 10, connu également sous l'abréviation du mode de fonctionnement CSMA/CD, est déclenché dans le réseau lorsqu'aucun signal de synchronisation n'est reçu par les nœuds au bout d'un cycle, c'est-à-dire après le temps de parole de tous les nœuds. Dans un tel cas, chaque nœud est apte à envoyer ses trames selon des intervalles temporels aléatoires pour éviter les collisions. En particulier, lorsqu'un nœud essaie d'envoyer une trame alors qu'un autre nœud est en train d'envoyer une autre trame à ce même instant, le premier nœud va attendre un temps aléatoire avant d'essayer d'envoyer sa trame à nouveau.

Selon l'invention, chaque nœud est configuré en outre pour mettre en œuvre un procédé de surveillance selon l'invention qui permet de reconfigurer le réseau lorsque celui-ci passe dans le mode de fonctionnement CSMA/CD, afin de revenir dans le mode de fonctionnement PLCA. Ce procédé est par exemple mis en œuvre de manière périodique dans le réseau 10. Autrement dit, les étapes 110 à 140 décrites ci-dessous peuvent être rebouclées selon une périodicité prédéterminée.

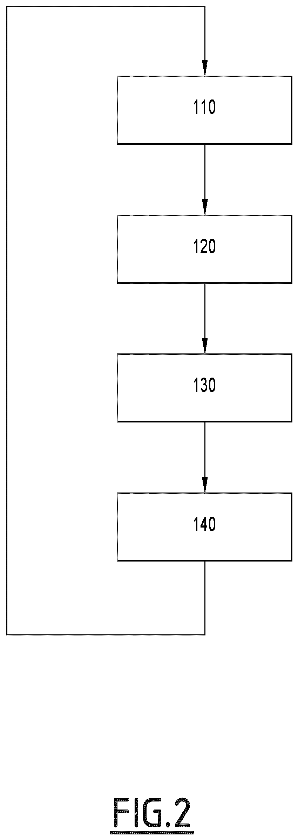

Ce procédé sera désormais expliqué en référence à la figure 2 présentant un organigramme de ses étapes.

Initialement, il est considéré que le réseau 10 fonctionne selon le mode de fonctionnement PLCA et l'ensemble de nœuds 12-0, ..., 12-N sont aptes à envoyer et à recevoir des trames.

Il est considéré en outre que les étapes décrites ci-dessous sont réalisées par chacun des nœuds 12-0, ..., 12-N. Ainsi, ces étapes seront décrites en référence à un seul nœud (par exemple le nœud 12-1) en sachant que tous les autres nœuds sont aptes à mettre en œuvre les mêmes étapes.

Lors d'une étape initiale 110, le nœud 12-1 récupère un état interne permettant de décrire le mode de fonctionnement actuel du réseau 10 du point de vue de ce nœud.

En particulier, cet état interne indique le mode de fonctionnement du réseau, soit le mode de fonctionnement PLCA ou le mode de fonctionnement CSMA/CD. Cet état interne indique également si ce nœud reçoit ou transmet un signal de synchronisation.

Plus particulièrement, l'état interne peut indiquer le mode de fonctionnement PLCA et le fait que ce nœud transmet un signal de synchronisation. Autrement dit, cet état interne indique que le nœud correspondant est le nœud master dans le réseau 10.

Selon un autre exemple, cet état interne peut indiquer que le réseau est dans le mode de fonctionnement PLCA et le nœud correspondant reçoit un signal de synchronisation. Dans un tel cas, le nœud correspondant est un nœud esclave qui reçoit alors un signal de synchronisation de la part d'un nœud master.

L'état interne peut également indiquer que le mode de fonctionnement du réseau 10 est le mode CSMA/CD et que le nœud correspondant ne reçoit aucun signal de signalisation. Ce cas correspond alors à un fonctionnement normal du nœud dans ce mode de fonctionnement CSMA/CD du réseau 10. Selon encore un autre exemple, l'état interne du nœud peut indiquer que le réseau 10 est dans le mode de fonctionnement CSMA/CD alors que le nœud correspondant reçoit ou transmet un signal de synchronisation. Ce dernier état indique un disfonctionnement du réseau qui sera alors traité comme cela sera expliqué en référence aux étapes suivantes du procédé.

Avantageusement, l'état interne du nœud est gardé dans son registre interne.

La récupération d'un tel état comprend donc la récupération de cet état à partir de ce registre interne du nœud 12-1.

Lors de l'étape 120 suivante, le nœud 12-1 transmet son état interne à l'ensemble des autres nœuds 12-0, 12-2 à 12-N.

Pour ce faire, le nœud 12-1 intègre son identifiant ainsi que l'état interne dans chaque trame émise par ce nœud dans le réseau 10.

Pour ce faire, différentes techniques sont possibles.

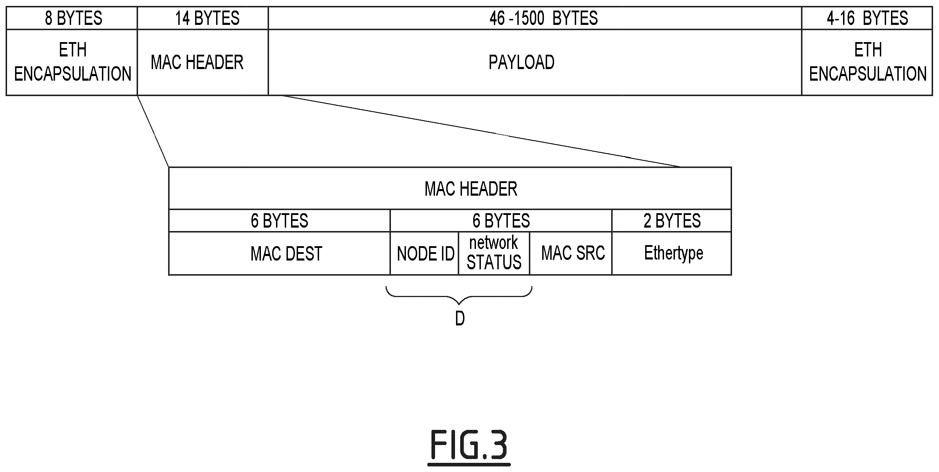

Selon une première technique illustrée sur la figure 3, le nœud 12-1 intègre des données supplémentaires D dans un entête de chaque trame. Cet entête correspond par exemple à l'entête de type MAC HEADER. Ces données supplémentaires D peuvent être intégrées plus particulièrement dans le champ indiquant la provenance de la trame, appelé le champ MAC Source.

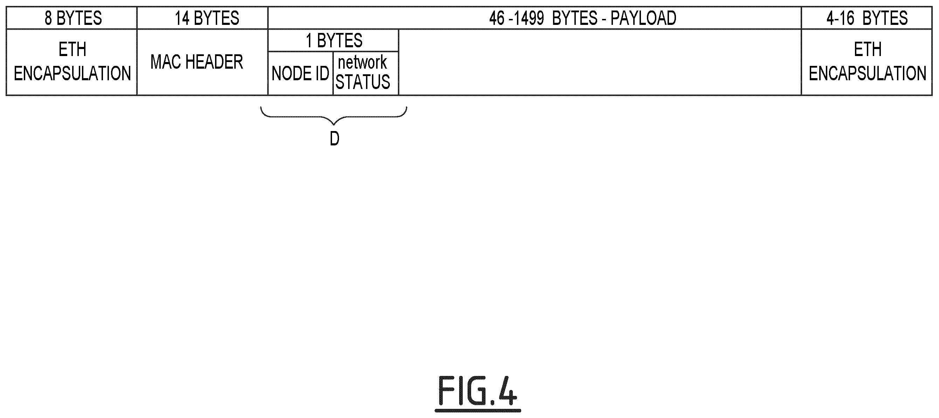

Selon une deuxième technique illustrée sur la figure 4, les données supplémentaires D sont intégrées dans la charge utile de la trame correspondante.

Cette charge utile est connue sous l'abréviation anglaise de Payload.

Selon encore une autre technique (non illustrée), les données supplémentaires D peuvent être intégrées dans un champ indépendant du champ dess données applicatives utiles Payload. Cela implique alors la diminution de la taille maximale du champ Payload.

Lors de l'étape 130 suivante, le nœud 12-1 analyse des états externes reçus de la part des autres nœuds du réseau 10 ou éventuellement, le cas lorsque ces états externes n'ont pas été reçus. En particulier, par états externes, on entend les états internes déterminés par les autres nœuds du réseau et transmis alors au nœud correspondant en utilisant les trames émises par ces nœuds.

L'étape d'analyse 130 permet de déterminer s'il est nécessaire notamment de reconfigurer le nœud 12-1 ou alors de maintenir sa configuration actuelle lors de l'étape 140, afin de rétablir si besoin le mode de fonctionnement PLCA du réseau 10.

Différents exemples de mise en œuvre de ces étapes 130 et 140 sont possibles. De plus, comme cela sera expliqué par la suite, il est nécessaire dans certains cas de mettre en œuvre ces étapes 130 et 140 plusieurs fois afin de parvenir au mode de fonctionnement PLCA du réseau 10.

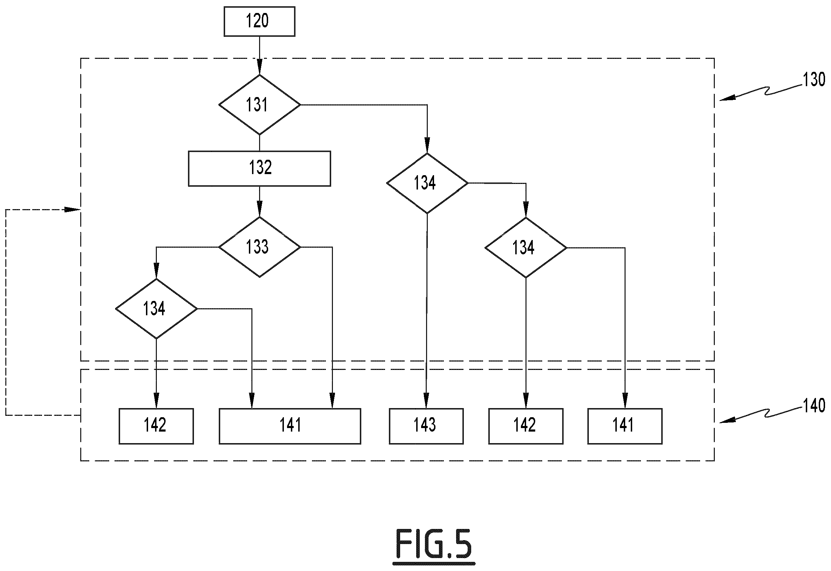

Un exemple d'une mise en œuvre possible de ces étapes est illustré sur la figure 5.

En référence à cette figure 5, l'étape d'analyse 130 comprend une première sous-étape 131 lors de laquelle le nœud 12-1 attend la réception des états externes issus des autres nœuds. Lorsqu'aucun état externe, c'est-à-dire aucune trame, n'est reçue de la part des autres nœuds au bout d'un premier intervalle temporel, le nœud 12-1 met en œuvre la sous-étape 132 lors de laquelle il force le passage dans le mode de fonctionnement CSMA/CD. Puis, le nœud 12-1 attend à nouveau la réception des états externes, c'est-à-dire des trames issues des autres nœuds, lors de la sous-étape 133.

Lorsqu'à l'issue d'un deuxième intervalle temporel qui est par exemple égal au premier intervalle temporel, le nœud 12-1 ne reçoit toujours pas de trame issue des autres nœuds, il est considéré que le nœud est défaillant et devrait alors être désactivé lors de l'étape 140. Sur la figure 5, la désactivation du nœud correspond alors à l'action désignée par la référence 141. Lorsque dans le cas contraire, le nœud 12-1 reçoit des trames issues des autres nœuds, le nœud met en œuvre une sous-étape de validation 134 des statuts externes reçus. Cette sous-étape de validation 134 sera expliquée plus en détail par la suite.

Lorsqu'à l'issue de l'étape 134, le statut du réseau indiquant le mode de fonctionnement CSMA/CD considéré comme non-valide, il est considéré à nouveau que le nœud est défaillant et il est alors désactivé lors de l'étape 140 par l'action 141.

Lorsqu'au contraire, le statut indiquant le mode de fonctionnement du réseau CSMA/CD est considéré comme valide lors de l'étape 134, il est considéré que le réseau 10, et en particulier les nœuds 12-0 à 12-N correspondant, doivent être reconfigurés lors de l'étape 140 pour rétablir le mode de fonctionnement PLCA.

En référence à la figure 5, cette action est alors notée par la référence 142 et sera expliquée plus en détail par la suite.

Lorsque lors de la sous-étape 131, le nœud 12-1 reçoit des trames issues des autres nœuds, c'est-à-dire des états externes, il met en œuvre la sous-étape 134 de validation du statut PLCA du réseau 10.

Lorsque ce statut est considéré comme valide à l'issue de la sous-étape 134, il est considéré que le réseau 10, et en particulier le nœud 12-1, fonctionne normalement dans le mode de fonctionnement PLCA et lors de l'étape 140, la configuration actuelle du réseau est maintenue.

En référence à la figure 5, cette action de maintien de la configuration actuelle du réseau correspond à la référence 143.

Lorsqu'au contraire après la première mise en œuvre de l'étape de validation 134, l'état indiquant le mode de fonctionnement PLCA du réseau 10 est considéré comme non valide, le nœud 12-1 met en œuvre à nouveau l'étape de validation 134 lors de laquelle il vérifie cette fois la validité de l'état indiquant le mode de fonctionnement CSMA/CD.

Lorsqu'à l'issue de cette deuxième mise en œuvre de la sous-étape 134, l'état indiquant le mode de fonctionnement CSMA/CD est considéré comme valide, il est considéré que le réseau 10 et notamment le nœud 12-1 doivent être reconfigurés lors de l'étape 140 pour rétablir le mode de fonctionnement PLCA du réseau 10.

Pour ce faire, le nœud 12-1 met en œuvre lors de l'étape 140 l'action 142 qui sera expliquée en détail par la suite.

Lorsqu'au contraire à l'issue de la deuxième mise en œuvre de la sous-étape de validation 134, l'état indiquant le mode de fonctionnement CSMA/CD est considéré comme non-valide, il est considéré que le nœud 12-1 est défaillant et doit être désactivé lors de l'étape 140. Ainsi, lors de l'étape 140, l'action 141 comprenant la désactivation du nœud est alors mise en œuvre.

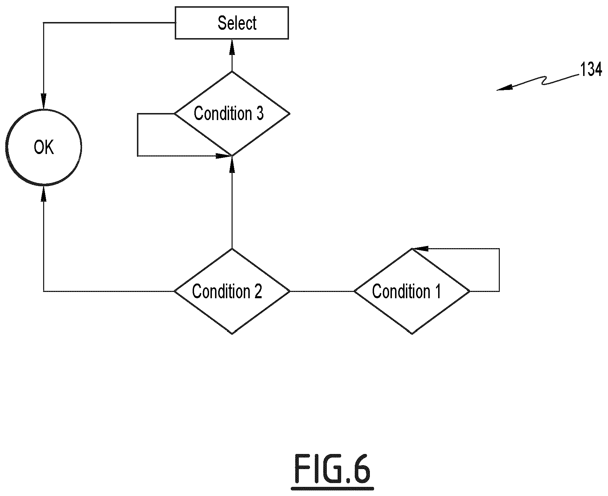

La figure 6 illustre un exemple de la mise en œuvre de la sous-étape 134 de validation des états externes reçus par le nœud 12-1 correspondant.

De manière générale, la sous-étape de validation 134 comprend la comparaison des états externes reçus de différents nœuds et la sélection de l'état valide correspondant à un état commun selon une majorité des états externes reçus.

Ainsi, selon l'exemple de la figure 6, la sous-étape 134 comprend la vérification de trois conditions.

La première condition (Condition 1 sur la figure 6) est respectée lorsque le nœud 12-1 reçoit deux statuts externes issus des deux nœuds différents.

Lorsque cela n'est pas le cas, le nœud 12-1 se met en attente jusqu'à recevoir les statuts externes issus de deux nœuds différents.

Lorsque deux statuts issus de deux nœuds différents sont reçus, le nœud 12-1 vérifie la deuxième condition (Condition 2 sur la figure 6) qui consiste à comparer les statuts reçus.

Lorsqu'il s'agit des statuts identiques, le nœud 12-1 conclut alors que ce statut est valide. Lorsqu'au contraire la deuxième condition n'est pas vérifiée, c'est-à-dire les statuts reçus des deux nœuds différents ne sont pas identiques, le nœud 12-1 met en œuvre la troisième condition (Condition 3 sur la figure 6) lors de laquelle il vérifie s'il a reçu un statut externe issu d'un autre nœud différent des deux premiers nœuds. Lorsque cela n'est pas le cas, le nœud 12-1 se met en attente d'un tel statut issu d'un troisième nœud différent des deux premiers nœuds.

Lorsque c'est le cas, le nœud 12-1 sélectionne l'état valide correspondant à l'état commun selon la majorité de statuts externes reçus. Autrement dit, dans un tel cas, le nœud 12-1 décide le statut valide en fonction de la majorité.

Bien entendu, d'autres modes de validation des états reçus sont également possibles. Par exemple il est possible d'effectuer une double vérification des états reçus de la part d'un même nœud.

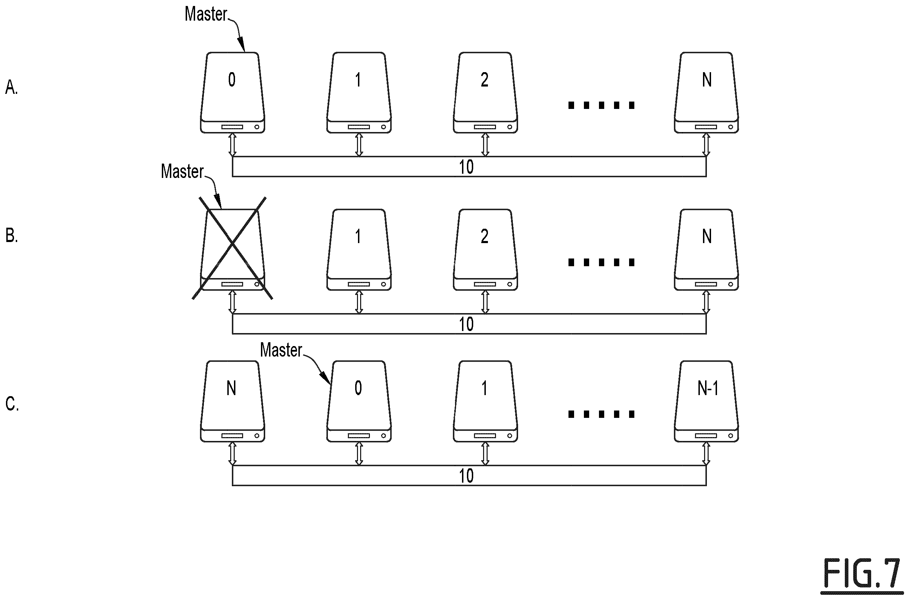

La figure 7 illustre la mise en œuvre de l'action 142 mise en œuvre lors de l'étape 140.

En particulier, cette action 142 comprend un décalage de l'identifiant du nœud afin de rétablir le mode de fonctionnement PLCA du réseau 10.

Ce décalage comprend l'attribution d'un nouvel identifiant déterminé en fonction du nombre maximal de nœuds dans le réseau lorsque le nœud correspondant est le nœud master. Dans le cas des autres nœuds, le décalage comprend la réduction de l'identifiant de ce nœud de un.

Dans sa partie A, la figure 7 illustre le fonctionnement normal du réseau 10 selon le mode de fonctionnement PLCA pour les nœuds ayant les identifiants allant de 0 jusqu'à N. Parmi ces nœuds, le nœud ayant l'identifiant 0 correspond au nœud master qui est apte à envoyer un signal de synchronisation aux autres nœuds.

Dans sa partie B, la figure 7 illustre le cas lorsque le nœud ayant l'identifiant 0 doit être reconfiguré et un nouveau nœud master doit être sélectionné. Pour cela, et comme cela est illustré dans la partie C de la figure 7, le précédent nœud master reçoit l'identifiant correspondant par exemple à l'identifiant maximal des nœuds dans le réseau et devient de ce fait nœud esclave. Dans un tel cas, les identifiants de tous les autres nœuds sont diminués d'un de sorte que le précédent nœud ayant l'identifiant numéro 1 devient le nœud ayant l'identifiant 0. De ce fait, ce nœud devient le nouveau nœud master.

Les autres nœuds, c'est-à-dire les nœuds précédents ayant les identifiants allant de 2 à N, restent les nœuds esclaves mais changent leurs identifiants qui vont maintenant de 1 à N-1.

Lorsqu'après un premier décalage des identifiants, il n'existe aucun nœud ayant l'identifiant 0, l'opération de décalage est effectuée encore une fois jusqu'à obtenir un tel nœud ayant l'identifiant 0. Cette nouvelle opération de décalage est effectuée lors d'une nouvelle mise en œuvre de l'étape 140 et de l'action 142, qui sont alors effectuées suite à une nouvelle mise en œuvre de l'étape d'analyse 130.

Ainsi, le réseau 10 peut fonctionner à nouveau selon le mode de fonctionnement PLCA. Dans un tel cas, le nouveau nœud master reçoit et transmet le signal de synchronisation correspondant.

On conçoit alors que la présente invention présente un certain nombre d'avantages.

En particulier, l'invention permet dans un premier temps de pouvoir détecter de manière fiable une défaillance sur le réseau. Cette détection est dite fiable car elle provient d'une redondance des différents états issus de différents nœuds. Cela rend alors la probabilité que la détection soit fausse sensiblement négligeable. Dans un second temps, l'invention permet de reconfigurer le réseau pour conserver et trouver le mode PLCA qui est alors le mode de fonctionnement souhaité.

L'invention met également en œuvre une technique de vérification des états externes transmis afin de protéger l'intégrité du réseau.

Lors de la reconfiguration du réseau, l'invention permet de désactiver un nœud dysfonctionnel pour prévenir d'une quelconque anomalie sur le réseau causée par ce nœud.

Enfin, l'invention permet également d'effectuer un décalage des identifiants des nœuds sur l'ensemble du réseau pour permettre la récupération du mode de fonctionnement PLCA le plus rapidement possible. Cette opération permet de répéter le décalage plusieurs fois en cas de multiples défaillances. Cette multiplicité des possibilités des reconfigurations permet de rendre plus fiable le réseau dans un contexte avionique puisque la probabilité d'avoir un système de multiples défaillances similaires est faible et diminue avec le nombre de défaillance.

Le réseau selon l'invention peut ainsi être efficacement utilisé notamment dans le domaine avionique pour remplacer les réseaux existants, par exemple les réseaux selon la norme ARINC 429.

## Revendications

1. Procédé de surveillance d'un réseau de type Ethernet Half Duplex comprenant une pluralité de nœuds (12-0, ..., 12-N) et présentant un mode de fonctionnement PLCA et un mode de fonctionnement CSMA/CD, chaque nœud (12-0, ..., 12-N) étant défini par un identifiant ;
dans le mode de fonctionnement PLCA, un nœud master (12-0) envoyant à l'ensemble des autres nœuds (12-1, ..., 12-N) un signal de synchronisation pour émission de leurs trames ;
dans le mode de fonctionnement CSMA/CD, l'ensemble des nœuds (12-0, ..., 12-N) émettant leurs trames selon des intervalles temporels aléatoires ;
le procédé comprenant les étapes suivantes mises en œuvre par chaque nœud (12-0, ..., 12-N) :
- récupération (110) d'un état interne du nœud (12-0, ..., 12-N) décrivant le mode de fonctionnement du réseau ;
- transmission (120) de l'état interne à l'ensemble des autres nœuds (12-0, ..., 12-N) ;
- analyse (130) des états externes reçus correspondant aux états internes transmis par des autres nœuds ;
- en fonction de cette analyse, reconfiguration (140) du nœud (12-0, ..., 12-N) ou maintien de sa configuration actuelle ; le procédé étant **caractérisé en ce que** l'étape de transmission (120) de l'état interne comprenant l'intégration de cet état interne dans chaque trame émise par le nœud (12-0, ..., 12-N) correspondant.

2. Procédé selon la revendication 1, dans lequel chaque état interne indique le mode de fonctionnement du réseau vu par le nœud (12-0, ..., 12-N) correspondant.

3. Procédé selon la revendication 2, dans lequel chaque état interne indique en outre si le nœud (12-0, ..., 12-N) correspondant reçoit ou transmet un signal de synchronisation.

4. Procédé selon l'une quelconque des revendications précédentes, dans lequel l'étape de reconfiguration (140) de chaque nœud (12-0, ..., 12-N) comprend une désactivation (141) de ce nœud ou un décalage (142) de son identifiant.

5. Procédé selon la revendication 4, dans lequel le décalage (142) de l'identifiant comprend :
- l'attribution d'un nouvel identifiant choisi en fonction du nombre maximal de nœuds (12-0, ..., 12-N) dans le réseau lorsque le nœud (12-0, ..., 12-N) correspondant est le nœud master ;
- la réduction de l'identifiant de « 1 » pour tous les autres cas.

6. Procédé selon l'une quelconque des revendications précédentes, dans lequel l'étape de l'analyse (130) des états externes reçus comprend une sous-étape de validation (134) comprenant la sélection d'un état valide parmi l'ensemble des états reçus.

7. Procédé selon la revendication 6, dans lequel :
- l'étape d'analyse (130) comprend une analyse d'au moins trois états externes issus de nœuds (12-0, ..., 12-N) différents ;
- la sous-étape de validation (134) comprend la comparaison des états externes reçus et la sélection de l'état valide correspondant à un état commun d'une majorité des états externes reçus.

8. Procédé selon la revendication 6 ou 7, dans lequel lorsque l'état valide indique :
- le mode de fonctionnement PLCA, la configuration actuelle du nœud (12-0, ..., 12-N) correspondant est maintenue ;
- le mode de fonctionnement CSMA/CD, le nœud (12-0, ..., 12-N) correspondant est reconfiguré par un décalage de son identifiant ;
- aucun de ces modes de fonctionnement, le nœud (12-0, ..., 12-N) correspondant est reconfiguré par une désactivation de ce nœud (12-0, ..., 12-N).

9. Procédé selon l'une quelconque des revendications précédentes, dans lequel l'étape d'analyse (130) comprend une sous-étape (132) de l'activation du mode de fonctionnement CSMA/CD lorsque le nœud (12-0, ..., 12-N) correspondant ne reçoit aucune trame dans un premier intervalle temporel.

10. Procédé selon la revendication 9, dans lequel suite à l'activation du mode de fonctionnement CSMA/CD, l'étape de reconfiguration (140) comprend un décalage (142) de l'identifiant du nœud (12-0, ..., 12-N) correspondant lorsque ce nœud (12-0, ..., 12-N) reçoit au moins une trame dans un deuxième intervalle temporel et une désactivation (142) du nœud (12-0, ..., 12-N) dans le cas contraire.

11. Réseau (10) de type Ethernet Half Duplex comprenant une pluralité de nœuds (12-0, ..., 12-N) et présentant un mode de fonctionnement PLCA et un mode de fonctionnement CSMA/CD, chaque nœud (12-0, ..., 12-N) étant défini par un identifiant ;
dans le mode de fonctionnement PLCA, un nœud master (12-0) étant apte à envoyer à l'ensemble des autres nœuds (12-1, ..., 12-N) un signal de synchronisation pour émission de leurs trame ;
dans le mode de fonctionnement CSMA/CD, l'ensemble des nœuds (12-0, ..., 12-N) étant aptes à émettre leurs trames selon des intervalles temporels aléatoires ; chaque nœud (12-0, ..., 12-N) étant configuré pour mettre en œuvre le procédé selon l'une quelconque des revendications précédentes.

## Patentansprüche

1. Überwachungsverfahren eines Half-Duplex-Ethernet-Netzes, umfassend eine Vielzahl von Knoten (12-0, ... 12-N) und das eine Betriebsart PLCA und eine Betriebsart CSMA/CD aufweist, wobei jeder Knoten (12-0, ... 12-N) durch eine Kennung definiert ist;
wobei in der Betriebsart PLCA ein Masterknoten (12-0) an alle anderen Knoten (12-1, ..., 12-N) ein Synchronisationssignal zum Senden ihrer Datenblöcke sendet;
in der Betriebsart CSMA/CD die Gesamtheit der Knoten (12-0, ..., 12- N) ihre Datenblöcke in zufälligen Zeitintervallen sendet;
wobei das Verfahren die folgenden Schritte umfasst, die von jedem Knoten (12-0, ..., 12-N) ausgeführt werden:
- Abrufen (110) eines internen Zustands des Knotens (12-0, ..., 12-N), der den Betriebsmodus des Netzes beschreibt;
- Übertragen (120) des internen Zustands an alle anderen Knoten (12-0, ..., 12- N);
- Analysieren (130) der empfangenen externen Zustände, die den von anderen Knoten übertragenen internen Zuständen entsprechen;
- abhängig von dieser Analyse, Rekonfigurieren (140) des Knotens (12-0, ..., 12-N) oder Beibehalten seiner aktuellen Konfiguration; wobei das Verfahren **dadurch gekennzeichnet ist, dass**
der Schritt eines Übertragens (120) des internen Zustands das Integrieren dieses internen Zustands in jeden Datenblock umfasst, der von dem entsprechenden Knoten (12-0, ..., 12-N) gesendet wird.

2. Verfahren nach Anspruch 1, wobei jeder interne Zustand den Betriebsmodus des Netzes aus Sicht des entsprechenden Knotens (12-0, ..., 12-N) angibt.

3. Verfahren nach Anspruch 2, wobei jeder interne Zustand ferner angibt, ob der entsprechende Knoten (12-0, ..., 12-N) ein Synchronisationssignal empfängt oder überträgt.

4. Verfahren nach einem der vorherigen Ansprüche, wobei der Schritt eines Rekonfigurierens (140) jedes Knotens (12-0, ..., 12-N) ein Deaktivieren (141) dieses Knotens oder eine Verschiebung (142) seiner Kennung umfasst.

5. Verfahren nach Anspruch 4, wobei die Verschiebung (142) der Kennung Folgendes umfasst:
- Zuweisen einer neuen Kennung, die abhängig von der maximalen Anzahl von Knoten (12-0, ..., 12-N) in dem Netz ausgewählt wird, wenn der entsprechende Knoten (12-0, ..., 12-N) der Master-Knoten ist;
- Verringern der Kennung um "1" für alle anderen Fälle.

6. Verfahren nach einem der vorherigen Ansprüche, wobei der Schritt eines Analysierens (130) der empfangenen externen Zustände einen Validierungsteilschritt (134) umfasst, umfassend die Auswahl eines gültigen Zustands aus der Menge der empfangenen Zustände.

7. Verfahren nach Anspruch 6, wobei:
- der Analyseschritt (130) eine Analyse von mindestens drei externen Zuständen umfasst, die von verschiedenen Knoten (12-0, ..., 12-N) stammen;
- der Validierungsunterschritt (134) ein Vergleichen der empfangenen externen Zustände und ein Auswählen des gültigen Zustands umfasst, der einem gemeinsamen Zustand einer Mehrheit der empfangenen externen Zustände entspricht.

8. Verfahren nach Anspruch 6 oder 7, wobei, wenn der gültige Zustand:
- die Betriebsart PLCA angibt, die aktuelle Konfiguration des entsprechenden Knotens (12-0, ..., 12- N) beibehalten wird;
- die Betriebsart CSMA/CD angibt, der entsprechende Knoten (12-0, ..., 12-N) durch eine Verschiebung seiner Kennung neu konfiguriert wird;
- keiner dieser Betriebsarten ist, der entsprechende Knoten (12-0, ..., 12-N) durch eine Deaktivierung dieses Knotens (12-0, ..., 12-N) rekonfiguriert wird.

9. Verfahren nach einem der vorherigen Ansprüche, wobei der Schritt eines Analysierens (130) einen Teilschritt (132) eines Aktivierens der Betriebsart CSMA/CD umfasst, wenn der entsprechende Knoten (12-0, ..., 12-N) in einem ersten Zeitintervall keinen Datenblock empfängt.

10. Verfahren nach Anspruch 9, wobei nach Aktivierung der Betriebsart CSMA/CD der Schritt eines Rekonfigurierens (140) eine Verschiebung (142) der Kennung des entsprechenden Knotens (12-0, ..., 12-N) umfasst, wenn dieser Knoten (12-0, ..., 12-N) mindestens einen Datenblock in einem zweiten Zeitintervall empfängt, und eine Deaktivierung (142) des Knotens (12-0, ..., 12-N) in dem gegenteiligen Fall.

11. Half-Duplex-Ethernet-Netz (10), das eine Vielzahl von Knoten (12-0, ..., 12-N) und eine Betriebsart PLCA und eine Betriebsart CSMA/CD umfasst, wobei jeder Knoten (12-0, ..., 12-N) durch eine Kennung definiert ist;
in der Betriebsart PLCA ein Masterknoten (12-0) dazu geeignet ist, an die Gesamtheit der anderen Knoten (12-1, ..., 12-N) ein Synchronisationssignal zum Senden ihrer Datenblöcke zu senden;
in der Betriebsart CSMA/CD alle Knoten (12-0, ..., 12- N) dazu geeignet sind, ihre Datenblöcke in zufälligen zeitlichen Intervallen zu senden;
jeder Knoten (12-0, ..., 12-N) dazu konfiguriert ist, um das Verfahren nach einem der vorherigen Ansprüche auszuführen.

## Claims

1. A method for monitoring a Half Duplex Ethernet network comprising a plurality of nodes (12-0, ..., 12-N) and having a PLCA operating mode and a CSMA/CD operating mode, each node (12-0, ..., 12-N) being defined by an identifier;
in the PLCA operating mode, a master node (12-0) sending to all the other nodes (12-1, ..., 12-N) a synchronization signal to send the frames thereof;
in the CSMA/CD operating mode, all nodes (12-0, ..., 12-N) sending the frames thereof at random time intervals;
the method comprising the following steps implemented by each node (12-0, ..., 12-N):
- retrieving (110) an internal state of the node (12-0, ..., 12-N) describing the network operation mode;
- transmission (120) of the internal state to all the other nodes (12-0, ..., 12-N);
- analysis (130) of the external states received corresponding to the internal states sent by other nodes;
- depending on such analysis, reconfiguration (140) of the node (12-0, ..., 12-N) or conservation of the current configuration thereof;
the method being **characterized in that** the step of transmission (120) of the internal state comprising the integration of the internal state into each frame sent by the corresponding node (12-0, ..., 12-N).

2. The method according to claim 1, wherein each internal state indicates the operating mode of the network seen by the corresponding node (12-0, ..., 12-N).

3. The method according to claim 2, wherein each internal state further indicates whether the corresponding node (12-0, ..., 12-N) receives or sends a synchronization signal.

4. The method according to any of the preceding claims, wherein the step of reconfiguration (140) of each node (12-0, ..., 12-N) comprises a deactivation (141) of the node or a shift (142) of the identifier thereof.

5. The method according to claim 4, wherein the shift (142) of the identifier comprises:
- the allocation of a new identifier chosen according to the maximum number of nodes (12-0, ..., 12-N) in the network when the corresponding node (12-0, ..., 12-N) is the master node;
- the reduction of the identifier by "1" for all other cases.

6. The method according to any of the preceding claims, wherein the step of analysis (130) of the received external states comprises a validation sub-step (134) comprising the selection of a valid state from the set of received states.

7. The method according to claim 6, wherein:
- the analysis step (130) comprises an analysis of at least three external states from different nodes (12-0, ..., 12-N);
- the validation sub-step (134) comprises the comparison of the external states received and the selection of the valid state corresponding to a common state of a majority of the external states received.

8. The method according to claim 6 or 7, wherein when the valid state indicates:
- the PLCA operating mode, the current configuration of the (12-0,..., 12-N) corresponding node is conserved;
- the CSMA/CD operating mode, the corresponding node (12-0, ..., 12-N) is reconfigured by a shift of the identifier thereof;
- none of the operating modes, the corresponding node (12-0, ..., 12-N) is reconfigured by a deactivation of the node (12-0, ..., 12-N).

9. The method according to any of the preceding claims, wherein the analyzing step (130) comprises a sub-step (132) of activation of the CSMA/CD operating mode when the corresponding node (12-0, ..., 12-N) receives no frames in a first time interval.

10. The method according to claim 9, wherein following the activation of the CSMA/CD operating mode, the reconfiguration step (140) comprises a shift (142) of the identifier of the corresponding node (12-0, ..., 12-N) when the node (12-0, ..., 12-N) receives at least one frame in a second time interval and a deactivation (142) of the node (12-0, ..., 12-N) otherwise.

11. A Half Duplex Ethernet network (10) comprising a plurality of nodes (12-0, ..., 12-N) and having a PLCA operating mode and a CSMA/CD operating mode, each node (12-0, ..., 12-N) being defined by an identifier;
in the PLCA operating mode, a master (12-0) node being apt to send a synchronization signal to all the other nodes (12-1, ..., 12-N) to issue the frames thereof;
in the CSMA/CD operating mode, all nodes (12-0, ..., 12-N) being apt to issue the frames thereof at random time intervals;
each node (12-0, ..., 12-N) being configured to implement the method according to any of the preceding claims.
